# EUROPEAN PATENT APPLICATION

(11) **EP 4 769 957 A1**
(43) Date of publication of application: **01.07.2026**
(21) Application number: 24882864.2
(22) Date of filing: 24.10.2024
(51) Int. Cl.: H04B 1/40, H04B 17/20, H04B 17/318, H04W 52/24, G06F 1/16, H04W 52/28, H04W 24/08, H04M 1/02, H04B 1/04

(54) **METHOD FOR CONTROLLING TRANSMISSION POWER IN ELECTRONIC DEVICE COMPRISING PLURALITY OF ANTENNAS, AND ELECTRONIC DEVICE ASSISTING SAME**

(30) Priority: 27.10.2023 KR 20230146030; 28.12.2023 KR 20230195283
(71) Applicant: Samsung Electronics Co., Ltd, Suwon-si, Gyeonggi-do 16677 (KR)
(72) Inventor: KIM, Jeongsik, Suwon-si, Gyeonggi-do 16677 (KR); KIM, Kwangho, Suwon-si, Gyeonggi-do 16677 (KR); SON, Jisu, Suwon-si, Gyeonggi-do 16677 (KR); SHIN, Seunghun, Suwon-si, Gyeonggi-do 16677 (KR); JUNG, Hyuntae, Suwon-si, Gyeonggi-do 16677 (KR)
(74) Representative: Gulde & Partner
(86) International application number: PCT/KR2024/016317
(87) International publication number: WO 2025/089837

(57) **Abstract**

A foldable electronic device according to an embodiment may comprise: a first antenna included in a first housing of the electronic device and configured to transmit or receive a signal associated with network communication; a second antenna included in a second housing of the electronic device and configured to transmit or receive a signal associated with the network communication; at least one RFIC electrically connected to each of the first antenna and the second antenna; a memory for storing instructions; and at least one processor connected to the memory and the at least one RFIC. The instructions, when executed by the at least one processor, may cause the electronic device to identify a first received signal strength corresponding to the first antenna and a second received signal strength corresponding to the second antenna. The instructions, when executed by the at least one processor, may cause the electronic device to determine whether the value of a first parameter identified on the basis of the first received signal strength and the second received signal strength is smaller than a threshold value. The instructions, when executed by the at least one processor, may cause the electronic device to determine whether the electronic device is in a folded state. The instructions, when executed by the at least one processor, may cause the electronic device to configure to transmit signals by using the first antenna and the second antenna on the basis of the determination that the value of the first parameter is smaller than the threshold value and the electronic device is in the folded state. The instructions, when executed by the at least one processor, may cause the electronic device to control the at least one RFIC to transmit the signals of the same phase via the first antenna and the second antenna.

## Description

### [Technical Field]

The disclosure relates to a method for controlling transmission power in an electronic device including multiple antennas and an electronic device supporting same.

### [Background Art]

Various services and additional functions provided through an electronic device, for example, a mobile electronic device such as a smartphone have been increased. Communication service providers or electronic device manufacturers competitively develop electronic devices for providing various functions and for differentiating these devices from devices of other businesses to improve effective values of such electronic devices and satisfy various desires of users. Therefore, various functions provided through electronic devices have been increasingly advanced.

In line with the high degree of integration of electronic devices and the widespread use of ultra-high-speed and high-capacity wireless communication, a variety of functions may be mounted in a single electronic device such as a mobile communication terminal. For example, in addition to communication functions, entertainment functions such as games, multimedia functions such as music and video playback, communication and security functions for mobile banking, and functions such as schedule management and electronic wallets are all concentrated in a single electronic device. Such electronic devices have become compact enough for users to carry in a convenient way.

As mobile communication services expand into multimedia service areas, the display size of electronic devices may be increased to allow users to fully utilize not only voice calls and short messages but also multimedia services. Accordingly, a foldable flexible display may be disposed on the entire area of a housing structure separated to be foldable.

### [Detailed Description of the Invention]

### [Technical Solution]

An electronic device configured to be foldable according to an embodiment may include a first antenna included in a first housing of the electronic device and configured to transmit or receive signals associated with network communication, a second antenna included in a second housing of the electronic device and configured to transmit or receive signals associated with the network communication, at least one RFIC electrically connected to each of the first antenna and the second antenna, memory storing instructions, and at least one processor connected to the at least one RFIC and the memory. The instructions, when executed by the at least one processor, may cause the electronic device to identify a first received signal strength corresponding to the first antenna and a second received signal strength corresponding to the second antenna. The instructions, when executed by the at least one processor, may cause the electronic device to identify whether a value of a first parameter identified based on the first received signal strength and the second received signal strength is less than a threshold value. The instructions, when executed by the at least one processor, may cause the electronic device to identify whether the electronic device is in a folded state. The instructions, when executed by the at least one processor, may cause the electronic device to, based on identifying that the value of the first parameter is less than the threshold value and the electronic device is in the folded state, configure transmission of signals via the first antenna and the second antenna. The instructions, when executed by the at least one processor, may cause the electronic device to control the at least one RFIC to transmit signals of the same phase via the first antenna and the second antenna.

According to an embodiment, an operation method for an electronic device may include an operation of identifying a first received signal strength corresponding to a first antenna included in a first housing of the electronic device and a second received signal strength corresponding to a second antenna included in a second housing of the electronic device. The method may include an operation of identifying whether a value of a first parameter identified based on the first received signal strength and the second received signal strength is less than a threshold value. The method may include an operation of identifying whether the electronic device is in a folded state. The method may include an operation of, based on identifying that the value of the first parameter is less than the threshold value and the electronic device is in the folded state, configuring transmission of signals via the first antenna and the second antenna. The method may include an operation of controlling at least one RFIC to transmit signals of the same phase via the first antenna and the second antenna.

An embodiment may provide a computer-readable storage medium storing at least one instruction, wherein the at least one instruction, when executed by at least one processor of an electronic device, may cause the electronic device to perform at least one operation. The at least one operation may include an operation of identifying a first received signal strength corresponding to a first antenna included in a first housing of the electronic device and a second received signal strength corresponding to a second antenna included in a second housing of the electronic device. The at least one operation may include an operation of identifying whether a value of a first parameter identified based on the first received signal strength and the second received signal strength is less than a threshold value. The at least one operation may include an operation of identifying whether the folded state of the electronic device is a closed state. The at least one operation may include an operation of, based on identifying that the value of the first parameter is less than the threshold value and the electronic device is in the folded state, configuring transmission of signals via the first antenna and the second antenna. The at least one operation may include an operation of controlling at least one RFIC to transmit signals of the same phase via the first antenna and the second antenna.

### [Brief Description of Drawings]

FIG. 1 is a block diagram illustrating an electronic device in a network environment according to an embodiment.
FIG. 2A illustrates a front diagram, a side diagram, and a rear diagram of an unfolded status of an electronic device according to an embodiment of the disclosure.
FIG. 2B illustrates a front diagram, a side diagram, and a rear diagram of a folded status of an electronic device according to an embodiment of the disclosure.
FIG. 2C is an exemplary diagram illustrating a folded status of an electronic device according to an embodiment of the disclosure.
FIG. 3A is a block diagram illustrating an electronic device configured to support legacy network communication and 5G network communication according to an embodiment of the disclosure.
FIG. 3B is a block diagram illustrating an electronic device configured to support legacy network communication and 5G network communication according to an embodiment of the disclosure.
FIG. 4 is a block diagram illustrating an electronic device according to an embodiment of the disclosure.
FIG. 5 is an exemplary diagram illustrating positions of multiple antennas included in an electronic device according to an embodiment of the disclosure.
FIG. 6 is a flowchart illustrating an operation method for an electronic device according to an embodiment.
FIG. 7 is an exemplary diagram illustrating a radiation pattern by multiple antennas included in an electronic device according to an embodiment of the disclosure.
FIG. 8A is a block diagram illustrating an electronic device according to an embodiment of the disclosure.
FIG. 8B is an exemplary diagram illustrating a waveform of a signal output by an electronic device according to a comparative example.
FIG. 8C is an exemplary diagram illustrating a waveform of a signal output by an electronic device according to an embodiment of the disclosure.
FIG. 9 is a flowchart illustrating an operation method for an electronic device according to an embodiment.
FIG. 10 is a flowchart illustrating an operation method for an electronic device according to an embodiment.
FIG. 11 is a flowchart illustrating an operation method for an electronic device according to an embodiment.
FIG. 12 is a flowchart illustrating an operation method for an electronic device according to an embodiment.

### [Mode for Carrying out the Invention]

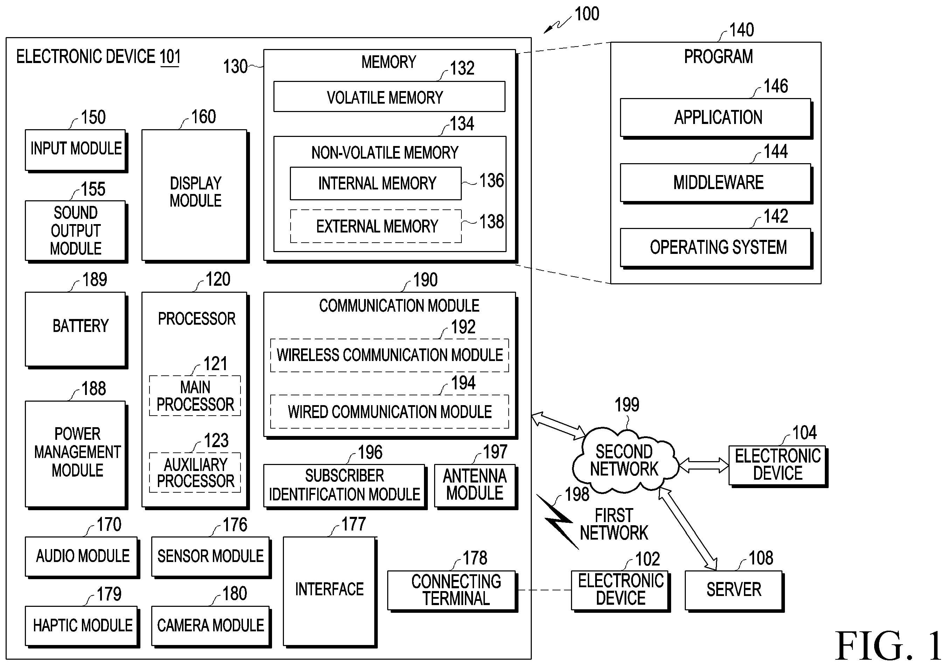

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

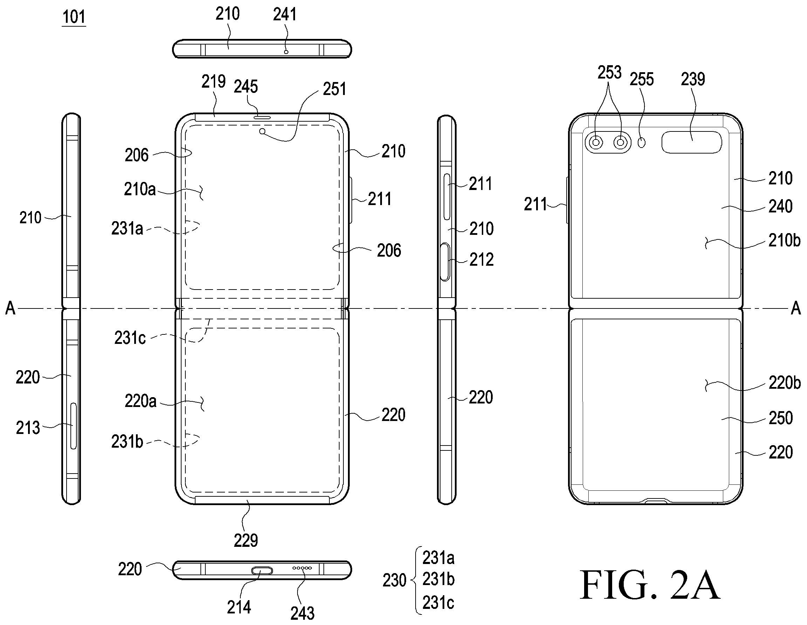

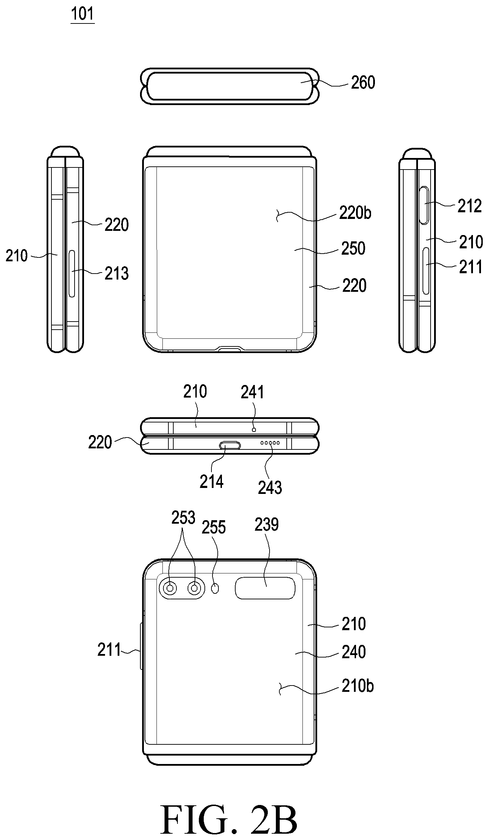

FIG. 2A illustrates a front diagram, a side diagram, and a rear diagram of an unfolded status of an electronic device according to an embodiment of the disclosure. FIG. 2B illustrates a front diagram, a side diagram, and a rear diagram of a folded status of an electronic device according to an embodiment of the disclosure.

Referring to FIGS. 2A and 2B, an electronic device 101 according to an embodiment may include a first housing 210, a second housing 220, a flexible or foldable display 230 (hereinafter, abbreviated as "display 230") (e.g., the display module 160 in FIG. 1) disposed in a space provided by the first housing 210 and the second housing 220, and a hinge cover 260.

According to an embodiment, a surface in which the display 230 is disposed may be defined as a front surface of the electronic device 101. The front surface of the electronic device 101 may be configured by a front plate (e.g., a glass plate or polymer plate including a coating layer) having a portion substantially transparent. A surface opposite to the front surface may be defined as a rear surface of the electronic device 101. The rear surface of the electronic device 101 may be configured by a substantially opaque rear plate (hereinafter referred to as a "rear cover"). The rear cover may be configured by, for example, coated or colored glass, ceramic, polymers, metals (e.g., aluminum, stainless steel (STS), or magnesium), or a combination of at least two thereof. The surface surrounding a space between the front surface and the rear surface may be defined as a side surface of the electronic device 101. The side surface may be coupled to the front plate and the rear cover and configured by a side bezel structure (or "side member") including a metal and/or polymer. In an embodiment, the rear cover and the side bezel structure may be integrally formed and include the same material (e.g., a metal material such as aluminum).

The electronic device 101 may include at least one of a display 230, an audio module 241, 243, or 245, a sensor module 255, a camera module 253, a key input device 211, 212, or 213, and a connector hole 214. According to an embodiment, the electronic device 101 may omit at least one component (e.g., the key input device 211, 212, or 213) or may additionally include another component (e.g., a light-emitting element).

According to an embodiment, the display 230 may be referred to as a display having at least a portion transformable to a flat surface or a curved surface. According to an embodiment, the flexible display 230 may include a folding area 231c, a first area 231a disposed at one side (e.g., a left side of the folding area 231c shown in FIG. 2A) with reference to the folding area 231c, and a second area 231b disposed at the other side (e.g., a right side of the folding area 231c shown in FIG. 2A). However, the division of areas in the display 230 of FIG. 2A is exemplary, and the display 230 may be divided into multiple areas (e.g., two or more than four) according to the structure or function thereof. For example, in the embodiment illustrated in FIG. 2A, the area of the display 230 may be divided by the folding area 231c or a folding axis A, but in another embodiment, the display 230 may be divided into areas based on a different folding area 231c or a different folding axis (e.g., a folding axis perpendicular to the folding axis A).

According to an embodiment, the audio module 241, 243, or 245 may include a microphone hole 241 and a speaker hole 243 or 245. A microphone configured to acquire a sound from outside may be disposed in the microphone hole 241 and in an embodiment, multiple microphones may be arranged to detect a direction of a sound. The speaker hole 243 or 245 may include an outer speaker hole 243 and a receiver hole 245 used for calling. In an embodiment, the speaker hole 243 or 245 and the microphone hole 241 may be implemented into one hole and a speaker may be included without a speaker hole 243 or 245 (e.g., a piezo speaker). The positions and number of microphone holes 241 and speaker holes 243 and 245 may vary depending on the embodiment.

According to an embodiment, the electronic device 101 may include a first camera device 251 disposed on a first surface 210a of the first housing 210 and a second camera device 253 disposed on a second surface 210b. In addition, the electronic device 101 may further include a flash (not shown). The camera devices 251 and 253 may include one or more lenses, an image sensor, and/or an image signal processor. The flash (not shown) may include, for example, a light-emitting diode or a xenon lamp.

According to an embodiment, the sensor module 255 may generate an electrical signal or a data value corresponding to an internal operation state or external environment state of the electronic device 101. Although not shown in the drawings, the electronic device 101 may additionally or alternatively include another sensor module (e.g., the sensor module 176 in FIG. 1) in addition to the sensor module 255 provided on the second surface 210b of the first housing 210. The electronic device 101 may include, as a sensor module, at least one of a proximity sensor, a fingerprint sensor, a heart rate monitor (HRM) sensor, a gesture sensor, a gyro sensor, a barometer, a magnetic sensor, an acceleration sensor, a grip sensor, a color sensor, an infrared (IR) sensor, a biometric sensor, a temperature sensor, a humidity sensor, or an illuminance sensor.

According to an embodiment, the key input device 211, 212, or 213 may be disposed on the side of a foldable housing (e.g., the first housing 210 or the second housing 220). In another embodiment, the electronic device 101 may not include some or all of the key input devices 211, 212, and 213 mentioned above, and the omitted key input devices may be implemented in a different form such as soft keys on the display 230. In some embodiments, the key input device may be configured to realize a key input through a sensor module (e.g., a gesture sensor).

According to an embodiment, the connector hole 214 may be configured to accommodate a connector (e.g., a USB connector) for transmitting and receiving power and/or data to and from an external electronic device, or additionally or alternatively, a connector for transmitting and receiving audio signals to and from the external electronic device.

According to an embodiment, a foldable housing may be implemented by the combination of the first housing 210, the second housing 220, a first rear cover 240, a second rear cover 250, and the hinge module (e.g., a hinge structure). The foldable housing of the electronic device 101 is not limited to the shape and coupling shown in FIG. 2A, and may be implemented by another shape or combination and/or coupling of components. For example, in another embodiment, the first housing 210 and the first rear cover 240 may be integrally configured and the second housing 220 and the second rear cover 250 may be integrally configured. According to an embodiment of the disclosure, the term "housing" may mean a combination and/or a combined configuration of other components not mentioned herein. For example, it may be described that the first area 231a of the display 230 configures one surface of the first housing 210, and in another embodiment, it may be described that the first area 231a of the display 230 is disposed or attached to one surface of the first housing 210.

In an embodiment, the foldable housing of the electronic device 101 may be implemented as a multi-foldable housing. According to an embodiment, the housing may include a first housing, a second housing, and a third housing. The first housing may be disposed, for example, between the second housing and the third housing. The second housing may be rotatably coupled to the first housing. The third housing may be rotatably coupled to the first housing. The display (e.g., the display module 160 in FIG. 1) may include a first display area corresponding to the first housing, a second display area corresponding to the second housing, and a third display area corresponding to the third housing.

According to an embodiment, the first housing 210 may be connected to the hinge structure and may include the first surface 210a facing in a first direction and the second surface 210b facing in a second direction opposite to the first direction. The second housing 220 may be connected to the hinge structure, may include a third surface 220a facing in a third direction and a fourth surface 220b facing in a fourth direction opposite the third direction, and may rotate or pivot with respect to the first housing 210 around the hinge structure (or the folding axis A).

According to an embodiment, the first housing 210 and the second housing 220 may be disposed on opposite sides (or upper and lower sides) based on the folding axis A and may have an overall symmetrical shape with respect to the folding axis A. An angle and a distance between the first housing 210 and the second housing 220 may vary depending on whether the electronic device 101 is in an unfolded status, a folded status, or partially unfolded (or partially folded) intermediate status. According to an embodiment, the first housing 210, unlike the second housing 220, may include additional sensors but may have a mutually symmetrical shape in other areas.

According to an embodiment, at least a portion of the first housing 210 and the second housing 220 may be configured by a metal or non-metal material having a selected strength for supporting the display 230. At least a portion formed of the metal material may be provided as a ground plane or a radiating conductor of the electronic device 101, and when provided as a ground plane, the at least a portion formed of the metal material may be electrically connected to a ground line formed on a printed circuit board.

According to an embodiment, the first rear cover 240 may be disposed on one side (e.g., the upper side in FIG. 2A) of the folding axis A on the rear surface of the electronic device 101, may have, for example, a substantially rectangular periphery, and may be surrounded by the first housing 210 (and/or the side bezel structure). For example, the second rear cover 250 may be disposed on the other side (e.g., the lower side in FIG. 2A) of the folding axis A on the rear surface of the electronic device 101 and may have a periphery surrounded by the second housing 220 (and/or the side bezel structure).

According to an embodiment, the first rear cover 240 and the second rear cover 250 may have substantially symmetrical shapes to each other with reference to the folding axis A. However, the first rear cover 240 and the second rear cover 250 do not necessarily have symmetric shapes and in another embodiment, the electronic device 101 may include the first rear cover 240 and the second rear cover 250 having an arbitrary shape. In another embodiment, the first rear cover 240 and the first housing 210 may be integrally configured and the second rear cover 250 and the second housing 220 may be integrally configured.

According to an embodiment, the first rear cover 240, the second rear cover 250, the first housing 210, and the second housing 220 may define a space for receiving a component (e.g., a printed circuit board or a battery) of the electronic device 101 disposed therein. According to an embodiment, one or more components may be arranged at or visually exposed through the rear surface of the electronic device 101. For example, at least a portion of a sub display 239 may be visually exposed through the first rear cover 240. In another embodiment, one or more components or sensors may be visually exposed through the first rear cover 240. In an embodiment, the component or sensor may include a proximity sensor, a rear camera, and/or a flash. In addition, although not separately shown in the drawings, one or more components or sensors may be visually exposed through the second rear cover 250.

According to an embodiment, the front camera 251 exposed to the front surface of the electronic device 101 through one or more openings, or the rear camera 253 exposed through the first rear cover 240 may include one or more lenses, an image sensor, and/or an image signal processor. The flash (not shown) may include, for example, a light-emitting diode or a xenon lamp. In some embodiments, two or more lenses (e.g., an infrared camera, a wide-angle lens, and a telephoto lens) and image sensors may be arranged on one surface of the electronic device 101.

According to an embodiment, the electronic device 101 may be switchable between a folded status of the display or an unfolded status of the display. For example, the first housing 210 and the second housing 220 may rotate with respect to each other between a folded status in which the housings face each other and a status in which the housings are unfolded by a specified angle from the folded status (e.g., the status illustrated in FIG. 2A, or the unfolded status of a terminal).

According to an embodiment, the electronic device 101 may be implemented in two ways including "in-folding," in which the first area 231a and the second area 231b are folded to face each other, and "out-folding," in which the first area 231a and the second area 231b are folded to face in opposite directions. For example, in the folded status in the in-folding manner, the first area 231a and the second area 231b may be substantially concealed, and in the fully unfolded status, the first area 231a and the second area 231b may be disposed to substantially face in the same direction. For example, in the folded status in the out-folding manner, the first area 231a and the second area 231b may be disposed to face opposite directions to be exposed to the outside, and in the fully unfolded status, the first area 231a and the second area 231b may be disposed to face substantially the same direction.

According to an embodiment, the display 230 may include a display panel (not shown) and a window member (not shown) and may be made of a flexible material. Although not separately illustrated, it would be easily understood by those skilled in the art that the display 230 or the display panel includes layers such as a light-emitting layer, substrate(s) encapsulating the light-emitting layer, an electrode or wiring layer, and/or adhesive layer(s) bonding adjacent layers. When the display 230 (e.g., the folding area 231c) is deformed into a flat shape and a curved shape, a relative displacement may occur between the layers included in the display 230. The relative displacement according to the deformation of the display 230 may increase as the location moves further away from the folding axis A and/or as the thickness of the display 230 increases.

According to an embodiment, the window member, such as a thin-film plate, may serve as a protective film for protecting the display panel. As a protective film, the thin-film plate may be made of a material that protects the display panel from external impacts, is scratch-resistant, and minimizes wrinkles in the folding area 231c even during repetitive folding and unfolding operations of the housings 210 and 220. For example, the thin-film plate may include a clear polyimide (CPI) film or ultra-thin glass (UTG) as a material.

Referring to FIG. 2B, the hinge cover 260 may be disposed between the first housing 210 and the second housing 220 and may be configured to cover internal components. According to an embodiment, the hinge cover 260 may be covered by or exposed to the outside through a portion of the first housing 210 and the second housing 220, depending on the status (e.g., the unfolded status (or a flat status), the intermediate status, or the folded status) of the electronic device 101.

According to an embodiment, as illustrated in FIG. 2A, when the electronic device 101 is in the unfolded status, the hinge cover 260 may be substantially hidden by the first housing 210 and the second housing 220 so as not to be exposed. As another example, as shown in FIG. 2B, when the electronic device 101 is in the folded status (e.g., a fully folded status), the hinge cover 260 may be exposed to the outside between the first housing 210 and the second housing 220. As another example, when the first housing 210 and the second housing 220 are in the intermediate status folded with a certain angle, the hinge cover 260 may be partially exposed to the outside between the first housing 210 and the second housing 220. In this case, the exposed area may be smaller than that of the fully folded status. In an embodiment, the hinge cover 260 may include a curved surface.

According to an embodiment, the electronic device 101 may further include protective member(s) 206 or decorative cover(s) 219 and 229 disposed on at least a portion of a periphery of the display 230 on the front surface (e.g., the first surface 210a or the third surface 220a). The protective member 206 or the decorative cover 219 or 229 may prevent at least a portion of the periphery of the display 230 from coming into contact with a mechanical structure (e.g., the first housing 210 or the second housing 220) and may provide a decorative effect on the exterior of the electronic device 101.

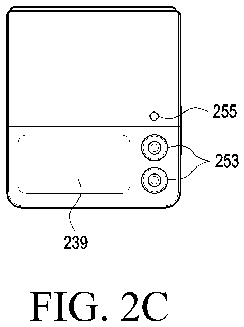

FIG. 2C is an exemplary diagram illustrating a folded status of a foldable device according to an embodiment of the disclosure.

Referring to FIG. 2C, the rear camera 253 may be arranged vertically, unlike the one shown in FIG. 2A, and the size of the sub-display 239 may be larger in the vertical length than the one shown in FIG. 2A, and the sensor module 255 may be disposed above the rear camera 253, not between the sub-display 239 and the rear camera 253, unlike the one shown in FIG. 2A.

According to an embodiment, the type, shape, size, and/or arrangement of the sub-display 239, the sensor module 255, and the rear camera 253 in FIG. 2C are merely an embodiment and are not limited thereto. For example, the sub display 239 may have a rectangular shape with rounded corners in FIG. 2C, but it may also have a circular or square shape.

According to an embodiment, the type and/or the number of at least one component visually exposed through the rear cover (e.g., the first rear cover 211 or the second rear cover 221) are not limited to those shown in FIG. 2C
According to an embodiment, in FIG. 2C, the electronic device is illustrated and described as being folded in the "in-folding" manner, but may also be folded in the "out-folding" manner, and in the case of being folded in the "out-folding" manner, one of the first area (e.g., the first area 231a in FIG. 2A) and the second area (e.g., the second area 231b in FIG. 2A) of the flexible display (e.g., the display module 160 in FIG. 1) exposed to the outside may be a sub-display 239.

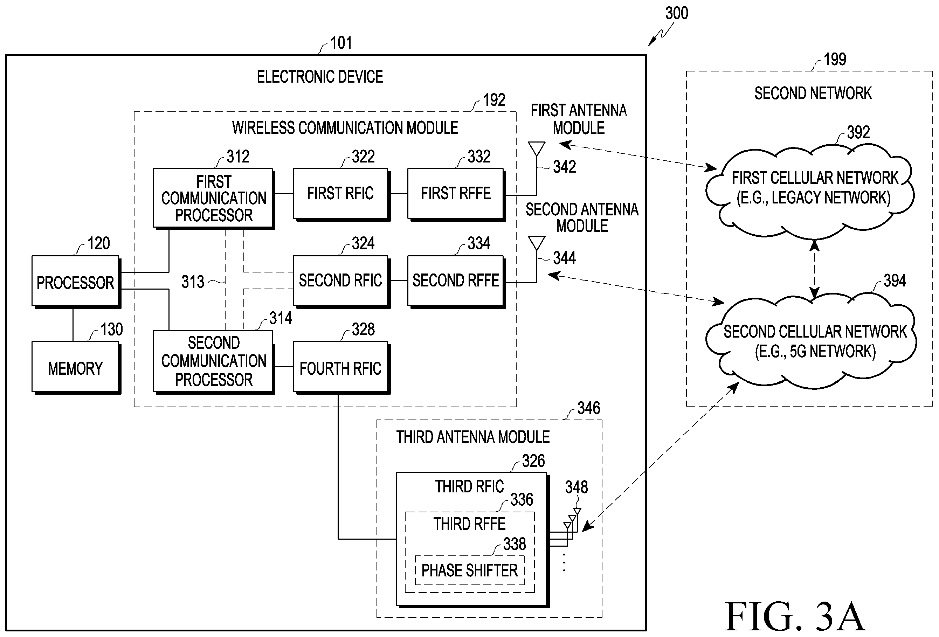

FIG. 3A is a block diagram 300 illustrating an electronic device 101 configured to support legacy network communication and 5G network communication according to some embodiments. Referring to FIG. 3A, the electronic device 101 may include a first communication processor 312, a second communication processor 314, a first radio frequency integrated circuit (RFIC) 322, a second RFIC 324, a third RFIC 326, a fourth RFIC 328, a first radio frequency front end (RFFE) 332, a second RFFE 334, a first antenna module 342, a second antenna module 344, a third antenna module 346, and antennas 348. The electronic device 101 may further include a processor 120 and memory 130. A second network 199 may include a first cellular network 392 and a second cellular network 394. According to another embodiment, the electronic device 101 may further include at least one of the components described in FIG. 1, and the second network 199 may further include at least one other network. According to an embodiment, a first communication processor 312, a second communication processor 314, a first RFIC 322, a second RFIC 324, a fourth RFIC 328, a first RFFE 332, and a second RFFE 334 may configure at least a portion of the wireless communication module 192. According to another embodiment, the fourth RFIC 328 may be omitted or included as a portion of the third RFIC 326.

The first communication processor 312 may support establishment of a communication channel in a band to be used for wireless communication with a first cellular network 392, and legacy network communication through the established communication channel. According to some embodiments, the first cellular network may be a legacy network including a second-generation (2G), third generation (3G), fourth generation (4G), or long-term evolution (LTE) network. The second communication processor 314 may support establishment of a communication channel corresponding to a designated band (e.g., about 6 GHz to about 60 GHz) among bands to be used for wireless communication with a second cellular network 394, and 5G network communication through the established communication channel. According to some embodiments, the second cellular network 394 may be a 5G network defined by 3GPP. Additionally, according to an embodiment, the first communication processor 312 or the second communication processor 314 may support establishment of a communication channel corresponding to a designated band (e.g., about 6 GHz or less) among bands to be used for wireless communication with the second cellular network 394, and 5G network communication through the established communication channel.

The first communication processor 312 may transmit or receive data to or from the second communication processor 314. For example, data having been classified to be transmitted through the second cellular network 394 may be changed to be transmitted through the first cellular network 392. In this case, the first communication processor 312 may receive transmission data from the second communication processor 314. For example, the first communication processor 312 may transmit or receive data to or from the second communication processor 314 through an inter-processor interface 313. The inter-processor interface 313 may be implemented, for example, as a universal asynchronous receiver/transmitter (UART) (e.g., a high-speed UART (HS-UART)) or a peripheral component interconnect bus express (PCIe) interface, but is not limited to these types. Alternatively, the first communication processor 312 and the second communication processor 314 may exchange control information and packet data information by using, for example, shared memory. The first communication processor 312 may transmit or receive various types of information, such as sensing information, information on the output strength, and resource block (RB) allocation information, to or from the second communication processor 314.

According to implementation, the first communication processor 312 may not be directly connected to the second communication processor 314. In this case, the first communication processor 312 may transmit or receive data to or from the second communication processor 314 through the processor 120 (e.g., an application processor). For example, the first communication processor 312 and the second communication processor 314 may transmit or receive data to or from the processor 120 (e.g., an application processor) through a HS-UART interface or a PCIe interface, but there is no limitation on the type of interface. Alternatively, the first communication processor 312 and the second communication processor 314 may exchange control information and packet data information with the processor 120 (e.g., application processor) using a shared memory.

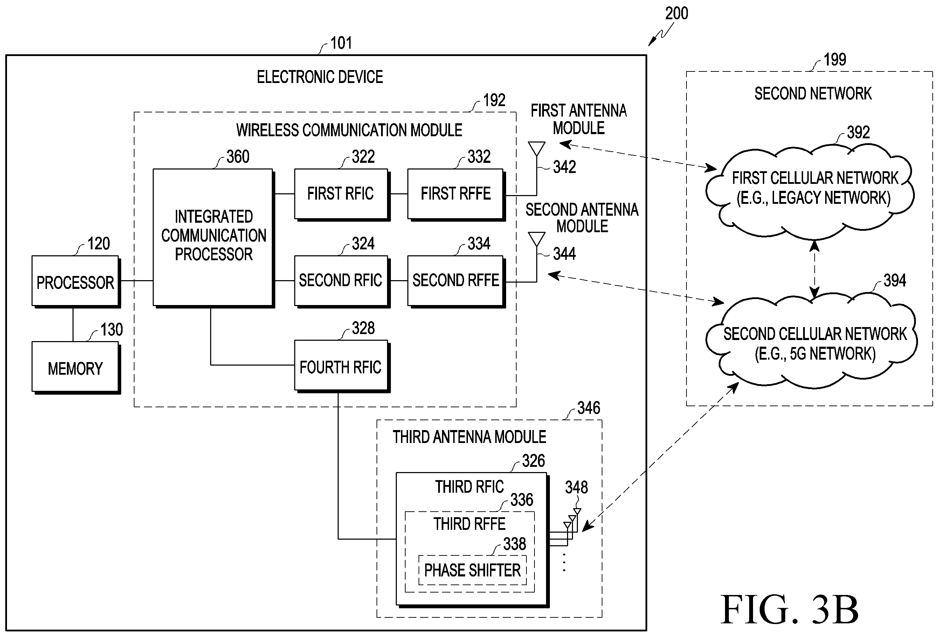

According to an embodiment, the first communication processor 312 and the second communication processor 314 may be implemented within a single chip or a single package. According to some embodiments, the first communication processor 312 or the second communication processor 314 may be configured within a single chip or a single package together with the processor 120, the auxiliary processor 123, or the communication module 190. For example, as shown in FIG. 3B, an integrated communication processor 360 may support all functions for communication with the first cellular network 392 and the second cellular network 394.

As described above, at least one of the processor 120, the first communication processor 312, the second communication processor 314, or the integrated communication processor 360 may be implemented as a single chip or a single package. In this case, the single chip or the single package may include memory (or a storage means) that stores instructions that cause the performance of at least some of the operations performed according to the embodiments, and a processing circuit (or an operation circuit, or any other name) for executing the instructions.

The first RFIC 322 may convert, when performing transmission, a baseband signal generated by the first communication processor 312 into a radio frequency (RF) signal in a range of about 700 MHz to about 3 GHz used for the first cellular network 392 (e.g., a legacy network). When performing reception, the RF signal may be acquired from the first cellular network 392 (e.g., the legacy network) via the antenna (e.g., the first antenna module 342) and preprocessed through the RFFE (e.g., the first RFFE 332). The first RFIC 322 may convert the preprocessed RF signal into a baseband signal so as to be processed by the first communication processor 312.

The second RFIC 324 may convert, during transmission, a baseband signal generated by the first communication processor 312 or the second communication processor 314 into an RF signal (hereinafter, a 5G Sub6 RF signal) used for a Sub6 band (e.g., about 6 GHz or less) for the second cellular network 394 (e.g., a 5G network). When performing reception, the 5G Sub6 RF signal may be acquired from the second cellular network 394 (e.g., a 5G network) via the antenna (e.g., the second antenna module 344) and preprocessed through the RFFE (e.g., the second RFFE 334). The second RFIC 324 may convert the preprocessed 5G Sub6 RF signal into a baseband signal that may be processed by a corresponding communication processor among the first communication processor 312 or the second communication processor 314.

The third RFIC 326 may convert the baseband signal generated by the second communication processor 314 into an RF signal (hereinafter, a 5G Above6 RF signal) in a 5G Above6 band (e.g., about 6 GHz to about 60 GHz) used in the second cellular network 394 (e.g., a 5G network). When performing reception, the 5G Above6 RF signal may be acquired from the second cellular network 394 (e.g., a 5G network) via the antenna (e.g., the antenna 348) and preprocessed through the third RFFE 336. The third RFIC 326 may convert the preprocessed 5G Above6 RF signal into a baseband signal so as to be processed by the second communication processor 314. According to an embodiment, the third RFFE 336 may be formed as a portion of the third RFIC 326.

According to an embodiment, the electronic device 101 may include a fourth RFIC 328, separate from or as at least a portion of the third RFIC 326. In this case, the fourth RFIC 328 may convert the baseband signal generated by the second communication processor 314 into an RF signal (hereinafter, an IF signal) in an intermediate frequency band (e.g., about 9 GHz to about 11 GHz), and then transfer the IF signal to the third RFIC 326. The third RFIC 326 may convert the IF signal into a 5G Above6 RF signal. When performing reception, the 5G Above6 RF signal may be received from the second cellular network 394 (e.g., a 5G network) via the antenna (e.g., the antenna 348) and converted into an IF signal by the third RFIC 326. The fourth RFIC 328 may convert the IF signal into a baseband signal that may be processed by the second communication processor 314.

According to an embodiment, the first RFIC 322 and the second RFIC 324 may be implemented as at least a portion of a single chip or a single package. According to an embodiment, in case that the first RFIC 322 and the second RFIC 324 in FIG. 3A or 3B are implemented as a single chip or a single package, they may be implemented as an integrated RFIC. In this case, the integrated RFIC may be connected to the first RFFE 332 and the second RFFE 334, convert a baseband signal into a signal of a band supported by the first RFFE 332 and/or the second RFFE 334, and transmit the converted signal to one of the first RFFE 332 and the second RFFE 334. According to an embodiment, the first RFFE 332 and the second RFFE 334 may be implemented as at least a portion of a single chip or a single package. According to an embodiment, at least one of the first antenna module 342 or the second antenna module 344 may be omitted or combined with another antenna module to process RF signals of multiple corresponding frequency bands.

According to an embodiment, the third RFIC 326 and the antenna 348 may be disposed on the same substrate to configure the third antenna module 346. For example, the wireless communication module 192 or the processor 120 may be disposed on a first substrate (e.g., a main PCB). In this case, the third RFIC 326 may be disposed on a portion (e.g., a lower surface) of a second substrate (e.g., a sub-PCB) separate from the first substrate, and the antenna 348 may be disposed on another portion (e.g., an upper surface) of the second substrate, thereby configuring the third antenna module 346. By placing the third RFIC 326 and the antenna 348 on the same substrate, it is possible to shorten the length of the transmission line therebetween. This may, for example, reduce the loss (e.g., attenuation) of high-frequency band signals (e.g., about 6 GHz to about 60 GHz) used for 5G network communication caused by the transmission line. As a result, the electronic device 101 may improve the quality or speed of communication with the second cellular network 394 (e.g., a 5G network).

According to an embodiment, the antenna 348 may be configured as an antenna array including multiple antenna elements that may be used for beamforming. In this case, the third RFIC 326 may include, for example, multiple phase shifters 338 corresponding to multiple antenna elements as a portion of the third RFFE 336. When performing transmission, each of the multiple phase shifters 338 may convert the phase of the 5G Above6 RF signal to be transmitted from the electronic device 101 to the outside (e.g., a base station of a 5G network) through a corresponding antenna element. When performing reception, each of the multiple phase converters 338 may convert the phase of the 5G above6 RF signal received from the outside via the corresponding antenna element to have an identical or substantially identical phase. This enables transmission or reception through beamforming between the electronic device 101 and the outside.

The second cellular network 394 (e.g., a 5G network) may be operated independently of the first cellular network 392 (e.g., a legacy network) (e.g., Stand-Alone (SA)), or may be operated in connection therewith (e.g., Non-Stand Alone (NSA)). For example, a 5G network may have only an access network (e.g., a 5G radio access network (RAN) or a next-generation RAN (NG RAN)) and may not have a core network (e.g., a next-generation core (NGC)). In this case, the electronic device 101 may access an external network (e.g., the Internet) under the control of a core network (e.g., an evolved packet core (EPC)) of a legacy network after accessing an access network of a 5G network. Protocol information (e.g., LTE protocol information) for communication with a legacy network or protocol information (e.g., New Radio (NR) protocol information) for communication with a 5G network may be stored in the memory 130 and may be accessed by other components (e.g., the processor 120, the first communication processor 312, or the second communication processor 314).

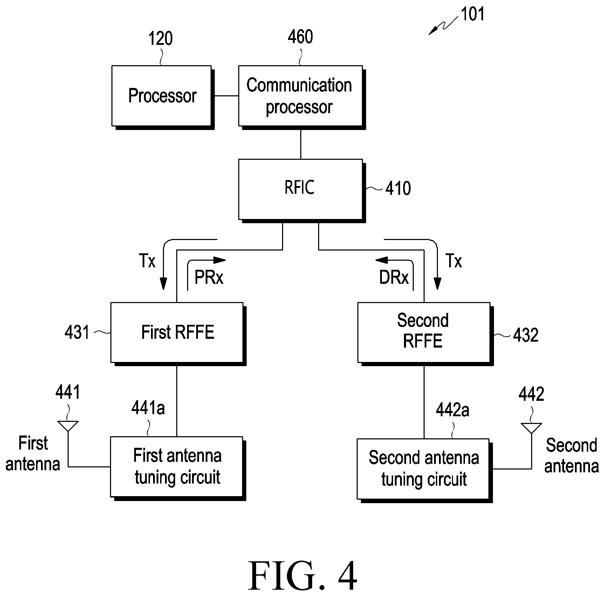

FIG. 4 is a block diagram illustrating an electronic device according to an embodiment of the disclosure.

Although a single communication processor 460 and a single RFIC 410 are shown to be connected to multiple RFEs 431 and 432 in the drawings of embodiments to be described below, the embodiments to be described below are not limited thereto. For example, as shown in FIG. 3A or 3B, the embodiments to be described below may include multiple communication processors 312 and 314 and/or multiple RFICs 322, 324, 326, and 328 connected to multiple RF front ends (RFEs) 431 and 432.

According to an embodiment, FIG. 4 illustrates an embodiment of an electronic device 101 including two antennas 441 and 442. Although FIG. 4 illustrates an electronic device including two antennas as an example, according to an embodiment, the electronic device 101 may include three or more antennas. For example, when the electronic device 101 is operating in MIMO, a signal transmitted from the base station may be received via the multiple antennas (e.g., two or more antennas) based on the MIMO.

Referring to FIG. 4, an electronic device (e.g., the electronic device 101 in FIG. 1) according to an embodiment may include a processor 120, a communication processor 460, a radio frequency integrated circuit (RFIC) 410, a first RF front-end (RFFE) 431, a second RFEE 432, a first antenna 441, a second antenna 442, a first antenna tuning circuit 441a, or a second antenna tuning circuit 442a. In an embodiment, the first RFFE 431 may be disposed in one area inside the housing of the electronic device 101, and the second RFFE 432 may be disposed in another area inside the housing of the electronic device 101, separated from the one area, but the embodiment is not limited to the arrangement.

According to an embodiment, the RFIC 410 may, during transmission, convert a baseband signal generated by the communication processor 460 into a radio frequency (RF) signal used in a communication network. For example, the RFIC 410 may transmit an RF signal used in a first communication network (e.g., a 5G network) or a second communication network (e.g., an LTE network) to the first antenna 441 through the first RFFE 431 and the first antenna tuning circuit 441a. The RFIC 410 according to an embodiment may transmit, in case that the second antenna 442 is configured as a transmit antenna, an RF signal used in the first communication network (e.g., a 5G network) or a second communication network (e.g., an LTE network) to the second antenna 442 through the second RFFE 432 and the second antenna tuning circuit 442a.

According to an embodiment, the first antenna tuning circuit 441a may be electrically connected to the first antenna 441, and the second antenna tuning circuit 442a may be electrically connected to the second antenna 442. According to an embodiment, the electronic device 101 (e.g., the communication processor 460) may change a configuration value of the first antenna tuning circuit 441a and/or a configuration value of the second antenna tuning circuit 442a depending on the strength (e.g., reference signal received power (RSRP), signal to noise ratio (SNR)) of the received signal or whether an imbalance has occurred. In an embodiment, the electronic device 101 may control the on/off state of switches included in the antenna tuning circuit (e.g., an impedance tuning circuit and/or an aperture tuning circuit) to be changed according to the change in the configuration values of the antenna tuning circuit. In an embodiment, the communication processor 460 may adjust the configuration value of the first antenna tuning circuit 441a and the configuration value of the second antenna tuning circuit 442a, thereby adjusting (e.g., tuning) the characteristics of the signals transmitted (e.g., transmission signals (Tx)) and received signal (e.g., reception signals (Rx)) via each connected antenna.

According to an embodiment, the first antenna 441 may be configured as a transmission antenna (Tx antenna). The electronic device 101 may change a configuration of the transmission antenna to the second antenna 442, based on identifying that the received signal strength of the first antenna 441 is poor.

According to an embodiment, the first antenna 441 may be configured as a first reception antenna (Rx antenna), and the second antenna 442 may be configured as a second reception antenna (Rx antenna). When the first antenna 441 is configured as a transmission antenna, the first antenna 441 may operate as a transmission and primary reception antenna (Tx/PRx antenna). The second antenna 442 may operate as a diversity reception (DRx) antenna for reception diversity. The electronic device 101 may receive a signal transmitted from the base station via the first antenna 441 and/or the second antenna 442 and decode the received signal. For example, a signal received via the first antenna 441 may be transmitted, as a first Rx signal, to the communication processor 460 via the first antenna tuning circuit 441a, the first RFFE 431, and the RFIC 410. For another example, a signal received via the second antenna 442 may be transmitted, as a second Rx signal, to the communication processor 460 via the second antenna tuning circuit 442a, the second RFFE 432, and the RFIC 410.

According to an embodiment, the first RFFE 431 may include at least one duplexer or at least one diplexer so as to process a transmission signal (Tx) and a reception signal (Rx) together. As another example, the second RFFE 432 may include at least one duplexer or at least one diplexer to process a transmission signal (Tx) and a reception signal (Rx) together.

According to an embodiment, when the electronic device 101 operates in MIMO, the electronic device 101 may be configured with a rank for operating in MIMO from the base station. The electronic device 101 may receive a signal transmitted from the base station based on the MIMO via the first antenna 441 and the second antenna 442. For the convenience of description, the signal received via the first antenna 441 may be referred to as a first signal, and the signal received via the second antenna 442 may be referred to as a second signal.

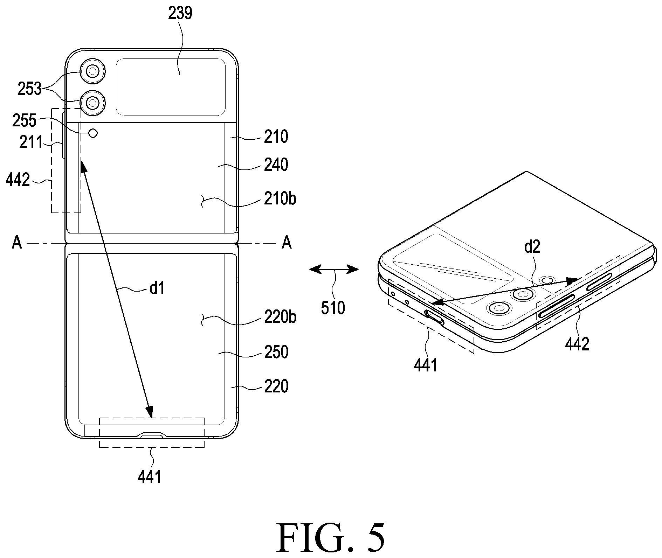

FIG. 5 is an exemplary diagram illustrating positions of multiple antennas included in an electronic device according to an embodiment of the disclosure. In FIG. 5A, a description of reference numerals identical to those in FIGS. 2A, 2B, and 2C may not be repeated.

In an embodiment, the electronic device 101 may include a first antenna 441 (e.g., the first antenna 441 in FIG. 4) disposed on one side (e.g., the lower end of the electronic device 101) of a housing (e.g., the second housing 220) of the electronic device 101 and a second antenna 442 (e.g., the second antenna 442 in FIG. 4) disposed on another side (e.g., the side of the electronic device 101) of a housing (e.g., the first housing 210) of the electronic device 101.

In an embodiment, the first antenna 441 and the second antenna 442 may be disposed on the housing of the electronic device 101 or disposed inside the housing, and there is no limitation on the arrangement positions. For example, the first antenna 441 and/or the second antenna 442 may be implemented as a metal antenna on the housing or as a laser direct structuring (LDS) antenna inside the first housing.

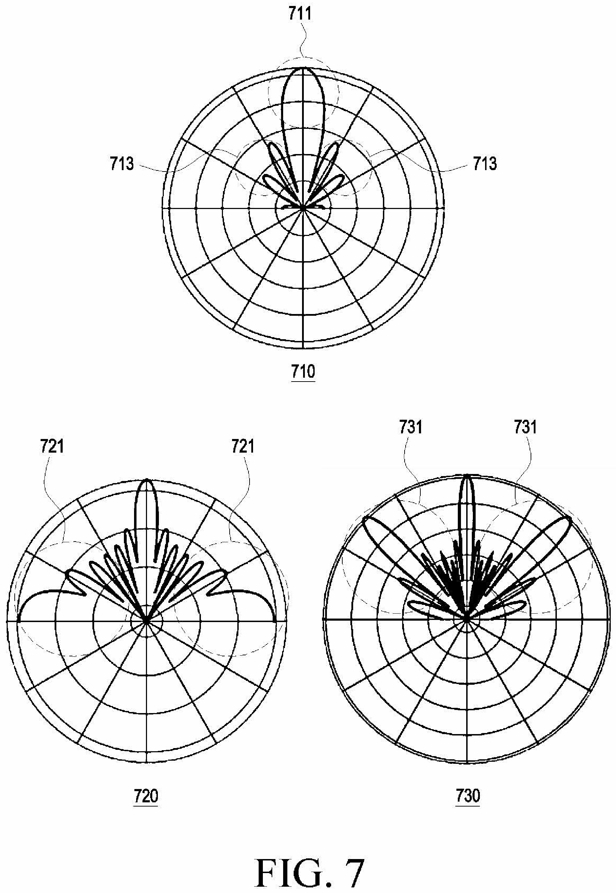

In an embodiment, a distance between the first antenna 441 and the second antenna 442 may vary depending on whether the electronic device 101 is folded based on the folding axis A (510). The housing may be folded, for example, based on the folding axis A. The state of the electronic device 101 may be changed from an unfolded state to a folded state, based on the folding based on the folding axis A. The unfolded state may include a fully open state or a partially open state. The folded state may include a fully closed state or a flex mode state. The flex mode state may include a state in which the electronic device 101 is operating in a flex mode. The flex mode may include a configuration associated with the operation of the electronic device 101 when the folding angle is within a range of 20 degrees to 160 degrees, under the assumption that the folding angle is 0 degrees in the fully folded state of the electronic device 101. The electronic device 101 may identify whether the electronic device 101 is in the flex mode state through the sensor module (e.g., the sensor module 176 in FIG. 1). The electronic device 101 may configure an operation mode of the electronic device 101 to the flex mode based on identifying that a folding angle of the electronic device 101 is within a designated range, for example, through at least two 6-axis sensors. The electronic device 101 may perform a signal transmission operation (e.g., 2 Tx operation) via the multiple antennas to be described below and/or a power control operation in the flex mode state. When the 2 Tx operation is performed in the folded state, the antenna gain may increase. In an embodiment, in case that the folding angle of the electronic device 101 corresponds to a narrower range than the range configured as the flex mode, the electronic device 101 may perform the 2 Tx operation and/or the power control operation, which will be described below. For example, the narrower range may correspond to 0 to 30 degrees, but is not limited thereto. The narrower range may include a range in which the antenna performance of the electronic device 101 is relatively significantly degraded compared to the unfolded state. The distance d1 between the first antenna 441 and the second antenna 442 in the unfolded state may be greater than the distance d2 between the first antenna 441 and the second antenna 442 in the folded state. When the electronic device 101 is in the unfolded state, the distance d1 between the first antenna 441 and the second antenna 442 may be greater than a half-wavelength of a signal radiated by the first antenna 441 or the second antenna 442. When the electronic device 101 is in the folded state, the distance d2 between the first antenna 441 and the second antenna 442 may be shorter than a half-wavelength of a signal radiated by the first antenna 441 or the second antenna 442. The distance between the first antenna 441 and the second antenna 442 may decrease when the electronic device 101 changes from the unfolded state to the folded state. The change in the antenna radiation efficiency according to the distance between the first antenna 441 and the second antenna 442 will be described below with reference to FIG. 7.

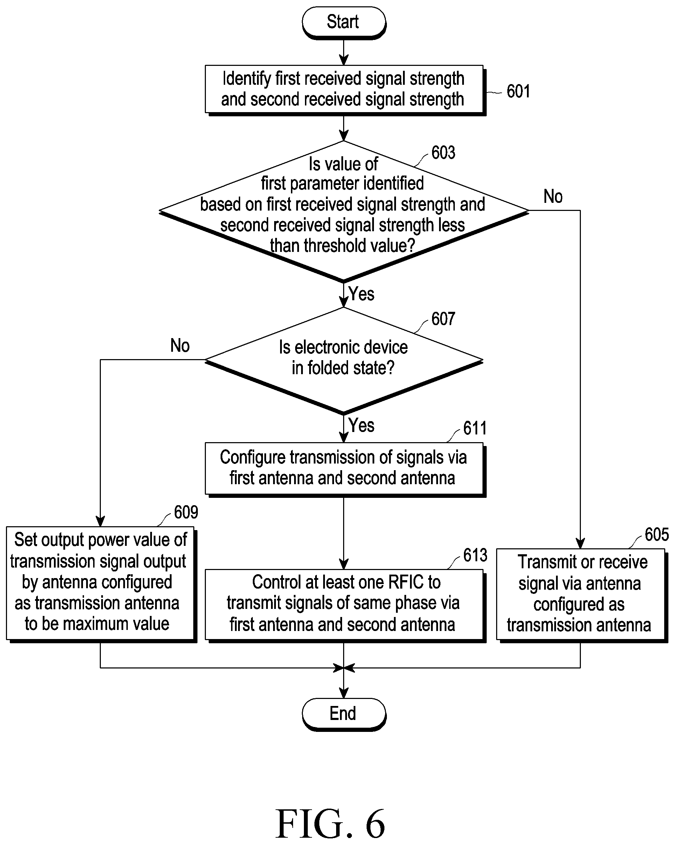

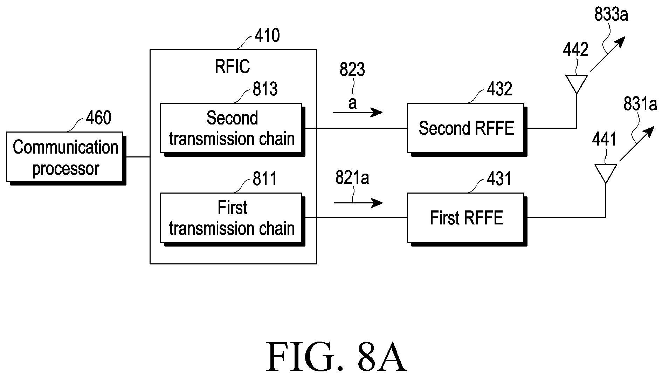

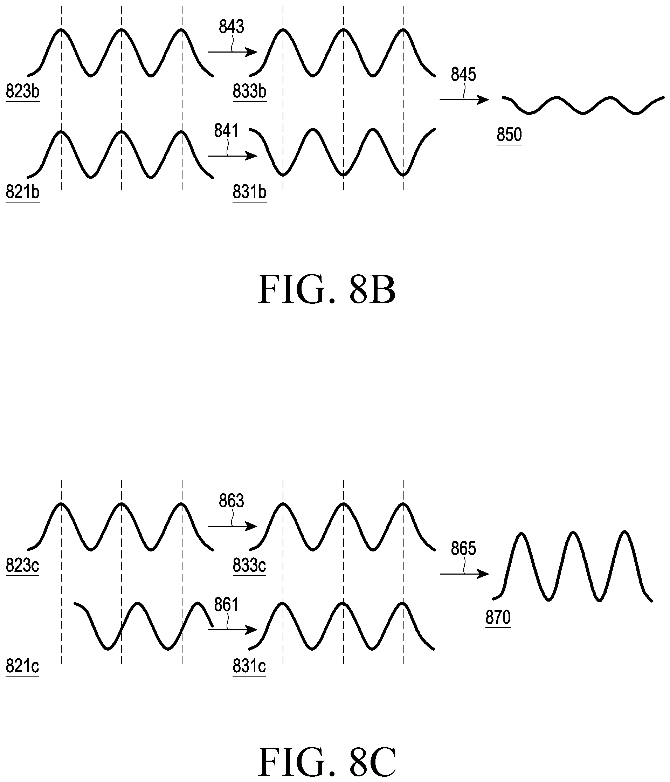

FIG. 6 is a flowchart illustrating an operation method for an electronic device according to an embodiment. Hereinafter, the embodiment in FIG. 6 will be described with reference to FIGS. 7, 8A, 8B, and 8C. FIG. 7 is an exemplary diagram illustrating a radiation pattern by multiple antennas included in an electronic device according to an embodiment of the disclosure. FIG. 8A is a block diagram illustrating an electronic device according to an embodiment of the disclosure. FIG. 8B is an exemplary diagram illustrating a waveform of a signal output by an electronic device according to a comparative example. FIG. 8C is an exemplary diagram illustrating a waveform of a signal output by an electronic device according to an embodiment of the disclosure.

According to an embodiment, the electronic device 101 (e.g., the processor 120, the first communication processor 312, the second communication processor 314, or the integrated communication processor 460) may identify the first received signal strength and the second received signal strength in operation 601. For example, the electronic device 101 may identify at least one of reference signal received power (RSRP), a reference signal received quality (RSRQ), or a received signal strength indicator (RSSI) corresponding to a signal received via a first antenna (e.g., the first antenna 441 in FIG. 5) or a second antenna (e.g., the second antenna 442 in FIG. 5). The parameter that the electronic device 101 identify to identify the received signal strength is not limited to the example described above. The electronic device 101 may, for example, identify the received signal strength at a predetermined cycle.

In an embodiment, in operation 603, the electronic device 101 may identify whether the value of a first parameter identified based on the first received signal strength and the second received signal strength is less than a threshold value. The electronic device 101 may, for example, identify a value associated with a difference between the first received signal strength and the second received signal strength as the first parameter. The electronic device 101 may, for example, identify a difference between an RSRP value corresponding to the first received signal strength and an RSRP value corresponding to the second received signal strength.

In an embodiment, the electronic device 101 may identify whether a difference between the first received signal intensity and the second received signal intensity is less than a first threshold value. The first threshold value may include a reference value for identifying whether a performance difference between the first antenna and the second antenna is relatively small. For example, the first threshold may be configured to a range corresponding to 3 to 7 dB or to a value within the range, but the first threshold may vary depending on the type of housing implemented in the electronic device 101 and/or the specifications of at least one antenna included in the electronic device 101. The electronic device 101 may identify, based on identifying that the difference between the first received signal strength and the second received signal strength is less than the first threshold value, that the difference between the first received signal strength and the second received signal strength is relatively small. The electronic device 101 may identify, based on identifying that the difference between the first received signal strength and the second received signal strength is greater than or equal to the first threshold value, that the difference between the first received signal strength and the second received signal strength is relatively large.

In an embodiment, the electronic device 101 may identify whether the value of a second parameter identified based on the first received signal strength and the second received signal strength is less than a second threshold value. In an embodiment, the value of the second parameter is a greater value between the first received signal strength and the second received signal strength. In an embodiment, the second threshold value may include a reference value for identifying whether the electronic device 101 is in a relatively weak electric field. For example, the second threshold may be configured to a range corresponding to -100 dBm to -120 dBm or to a value within the range, but the second threshold may vary depending on the type of housing implemented in the electronic device 101 and/or the specifications of at least one antenna included in the electronic device 101. The electronic device 101 may identify that the electronic device 101 is located in a relatively weak electric field, based on identifying that a greater value between the first received signal strength and the second received signal strength is less than the second threshold value. The electronic device 101 may identify that the electronic device 101 is located in a relatively strong electric field, based on identifying that a greater value between the first received signal strength and the second received signal strength is greater than or equal to the second threshold value. In an embodiment, the operation of identifying whether the first parameter of operation 603 is less than the first threshold value may be replaced by an operation of identifying whether the second parameter is less than the second threshold value.

In an embodiment, the electronic device 101 may perform both the operation of identifying whether the first parameter is less than the first threshold value and the operation of identifying whether the second parameter is less than the second threshold value. The electronic device 101 may identify that a condition associated with a relatively weak electric field is satisfied, based on identifying that a greater value between the first received signal strength and the second received signal strength is less than the second threshold value, and a difference between the first received signal strength and the second received signal strength is less than the first threshold.

In an embodiment, the electronic device 101 may transmit or receive a signal via the antenna configured as a transmission antenna, in operation 605, based on identifying that the value of the first parameter identified based on the first received signal strength and the second received signal strength is equal to or greater than a threshold value (operation 603-No). For example, the electronic device 101, in case that the first parameter is greater than or equal to the first threshold value, may configure an antenna having a greater received signal strength between the first antenna and the second antenna as a transmission antenna. The electronic device may configure the antenna corresponding to a larger RSRP value as the transmission antenna. For example, in case that the first antenna is configured as the transmission antenna, the electronic device 101 may transmit a signal associated with a network communication (e.g., a cellular network communication) via the first antenna.

In an embodiment, the electronic device 101 may identify whether the electronic device 101 is in the folded state in operation 607. For example, the electronic device (e.g., the communication processor 460 in FIG. 4) may identify whether the electronic device 101 is in the folded state or the unfolded state by using the sensor module (e.g., the sensor module 176 in FIG. 1), based on information related to the state of the electronic device 101 identified by the application processor (e.g., the main processor 121 in FIG. 1). The folded state may include, for example, a fully closed state or a flex mode state. The electronic device 101 may set an output power value of a transmission signal output by the antenna configured as the transmission antenna to be a maximum value in operation 609, based on identifying that the electronic device 101 is not in the folded state (operation 607-No). The electronic device 101 may, for example, configure the transmission power of the signal output via the first antenna configured as the transmission antenna to a maximum value, based on identifying that the electronic device 101 is in the unfolded state. The electronic device 101 may configure the transmit power of the transmission antenna to a maximum value, based on identifying that a channel established between the electronic device 101 and a communication network (e.g., a base station) may be poor in an electric field environment around the electronic device 101. The maximum value of the transmission power of the transmission antenna may vary depending on parameters assigned from a communication network and/or a frequency band.

In an embodiment, based on identifying that the electronic device 101 is in the folded state (operation 607-Yes), the electronic device 101 may configure, in operation 611, transmission of signals via the first antenna and the second antenna. In an embodiment, the electronic device 101 may set the output power value of the first transmission signal output by the first antenna and the output power value of the second transmission signal output by the second antenna to a maximum value. In an embodiment, when the electronic device 101 corresponds to the folded state, the electronic device 101 may enhance the transmission performance by transmitting the same data to the communication network via the multiple antennas.

In an embodiment, the electronic device 101, in case that the second parameter is less than the second threshold value, may set output power values of the first transmission signal and the second transmission signal to a maximum value. The electronic device 101 may, in case that the second parameter is greater than or equal to the second threshold value, change the output power value of the first transmission signal to a first value smaller than the maximum value and set the output power value of the second transmission signal to a second value smaller than the maximum value.

Table 1 illustrates the transmission performance of the first antenna or the second antenna according to the state of the electronic device 101.

**[Table 1]**

| Transmission power | Unfolded state | Folded state |
|---|---|---|
| First antenna | 13.5 dBm | 10.8 dBm |
| Second antenna | 25 dBm | 18.2 dBm |

In the example of Table 1, when the state of the electronic device 101 corresponds to the folded state, it is identified that the transmission performance may decrease compared to when the state of the electronic device 101 corresponds to the unfolded state. For example, the transmission performance of the first antenna may decrease by about 2.7 dB when the state of the electronic device 101 is the folded state, compared to the unfolded state. The transmission performance of the second antenna may decrease by about 6.7 dB when the electronic device 101 is in the folded state, compared to the unfolded state. The electronic device 101 may transmit a signal via the multiple antennas, based on the possibility that the transmission performance may be degraded if a signal is transmitted via only one antenna while the electronic device 101 is in the folded state. In an embodiment, the order of performing operation 603 and operation 607 may be changed. For example, the electronic device 101 may identify whether the first parameter is less than a threshold value after identifying whether the electronic device 101 is in the folded state. In an embodiment, operation 603 and operation 607 may be performed independently of each other. For example, the electronic device 101 may identify whether the electronic device 101 is in the folded state, or identify whether the first parameter is less than a threshold value. In an embodiment, referring to FIG. 7, a radiation pattern of a signal transmitted by multiple antennas may vary depending on a distance between the antennas. Referring to reference numeral 710, it may be understood that when the distance between the antennas is shorter than half the wavelength of the signal radiated by the antennas, the directivity of the signal output simultaneously by the multiple antennas may be enhanced. If the distance between the antennas is shorter than half the wavelength of a signal radiated by the antennas, the influence of a side lobes 713 except for a main lobe 711 may be relatively small, thereby improving the directivity of the signal.

In an embodiment, according to reference numerals 720 and 730, it may be understood that when the distance between the antennas is greater than the half-wavelength of the signal radiated by the antennas, the directivity of the signal output simultaneously by the multiple antennas may decrease. For example, referring to reference numeral 720, when the distance between the antennas corresponds to the wavelength of the signal radiated by the antennas, it may be understood that the influence of the side lobes 721 increases, thereby decreasing the directivity of the signal output simultaneously from the multiple antennas. Referring to reference numeral 730, when the distance between the antennas corresponds to one and half-wavelength of the signal radiated by the antennas, it may be understood that the influence of the side lobes 731 increases, thereby decreasing the directivity of the signal output simultaneously from the multiple antennas.

In an embodiment, the electronic device 101, based on the relationship between the spacing between the multiple antennas shown in FIG. 7 and the directivity of a signal output simultaneously from the antennas, may improve the directivity of a transmission signal by transmitting a signal at least simultaneously via the first antenna and the second antenna when the electronic device 101 corresponds to the folded state.

Table 2 shows the transmission performance according to the number of transmission antennas when the electronic device 101 corresponds to the folded state.

**[Table 2]**

| Transmission power | 1 Tx | 2 Tx |
|---|---|---|
| First antenna | 10.8 dBm | 20.2 dBm |
| Second antenna | 18.2 dBm | |

In the example of Table 2, it is described that when the electronic device 101 corresponds to the folded state, transmission performance may be improved when signals are simultaneously transmitted via multiple antennas compared to when a signal is transmitted via only one antenna. For example, when the electronic device 101 transmits signals simultaneously via the first antenna and the second antenna, the transmission power may be improved by about 1.4 dB compared to when the signal is transmitted only using the first antenna. When the electronic device 101 transmits signals simultaneously via the first antenna and the second antenna, the transmission power may be improved by about 2 dB compared to when the signal is transmitted only using the second antenna. The values described in Table 1 and Table 2 are exemplary, and may be measured differently depending on at least one of a measurement environment (or a test environment), a development environment of the electronic device 101, a structure of a housing of the electronic device 101, or a structure in which multiple antennas are arranged within the electronic device 101. The electronic device 101 may set the transmission power of the signal output via the first antenna and the second antenna to a maximum value, based on the condition associated with the received signal strength identified in operation 603 being satisfied. In an embodiment, based on configuring transmission of a signal via the first antenna and the second antenna, the electronic device 101 may control at least one RFIC (e.g., at least one of the first RFIC 322, the second RFIC 324, the third RFIC 326, or the fourth RFIC 328 in FIG. 3A or 3B, or the RFIC 410 in FIG. 4) to transmit a signal of the same phase via the first antenna and the second antenna in operation 613. The electronic device 101 may, for example, control at least one RFIC, based on a time delay, to transmit a signal of the same phase via the first antenna and the second antenna. The RFIC may make phases of a signal output via the first antenna and a signal output via the second antenna identical, based on a time delay. In an embodiment, referring to FIG. 8A, the RFIC 410 (e.g., the RFIC 410 in FIG. 4) of the electronic device 101 may include a first transmission chain 811 and a second transmission chain 813. The RFIC 410 may, based on a control signal received from the communication processor 460, output a signal 821a for the first antenna 441 by using the first transmission chain 811. The RFIC 410 may adjust the frequency and/or phase corresponding to the signal 821a for the first antenna, based on the operation of the first transmission chain 811. The signal 821a output by the RFIC 410 may be amplified by the first RFFE 431 and then transferred to the first antenna 441. The RFIC 410 may, based on a control signal received from the communication processor 460, output a signal 823a for the second antenna 442 by using the second transmission chain 813. The RFIC 410 may adjust the frequency and/or phase corresponding to the signal 823a for the first antenna, based on the operation of the second transmission chain 813. The signal 823a output by the RFIC 410 may be amplified by the second RFFE 432 and then transferred to the second antenna 442. In an embodiment, the phase of a transmission signal resulting from a superposition of the signal 831a radiated via the first antenna 441 and the signal 833a radiated via the second antenna 442 may depend on the phases of signals 821a and 823a output from the RFIC 410.

In the comparative example, referring to FIG. 8B, the RFIC (e.g., the RFIC 410 in FIG. 8A) may output signals 821b and 823b with the same phase, based on the operation of the first transmission chain (e.g., the first transmission chain 811 in FIG. 8A) and the second transmission chain (e.g., the second transmission chain 813 in FIG. 8A). The phase of a signal 821b for the first antenna (e.g., the first antenna 441 in FIG. 8A) output from the RFIC or the phase of a signal 823b for the second antenna (e.g., the second antenna 442 in FIG. 8A) output from the RFIC may be changed in the process of transferring 841 and 843 the signals to the first antenna or the second antenna. The signal 831b radiated by the first antenna and the signal 833b radiated by the second antenna may be superimposed. Although the signals 821b and 823b output from the RFIC 410 have the same phase, the signals 831b and 833b radiated by the multiple antennas may have different phases due to a phase change during the process of transferring the signals to the antennas, thereby causing destructive interference 845. The transmission power corresponding to the superimposed signal 850 may have a value smaller than the transmission power corresponding to the signal radiated by the first antenna or the second antenna.

In an embodiment, referring to FIG. 8C, the RFIC may output signals 821c and 823c of different phases, based on the operations of the first transmission chain and the second transmission chain. For example, the RFIC may output signals 821c and 823c having a phase difference of one-quarter wavelength based on the time delay, but the phase difference between the signals 821c and 823c is not limited thereto. The phase of a signal 821c for the first antenna output from the RFIC or the phase of a signal 823c for the second antenna output from the RFIC may be changed during the process of transferring 861 and 863 the signals to the first antenna or the second antenna. The signal 831c radiated by the first antenna and the signal 833c radiated by the second antenna may be superimposed. Although phases of the signals 821c and 823c output from the RFIC are different, constructive interference may occur 865 because phases of the signals 831c and 833c radiated by the multiple antennas are changed in the process of transferring the signals to the antennas. The transmission power corresponding to the superimposed signal 870 may have a value greater than the transmission power corresponding to the signal radiated by the first antenna or the second antenna. In an embodiment, the phase difference between signals 821c and 823c output by the RFIC for generating the constructive interference may be configured to vary depending on the arrangement of components inside the electronic device 101 and/or the frequency band of the signals output by the antennas. In an embodiment, the electronic device 101 may improve the transmission performance by transmitting signals of the same phase at least simultaneously through the multiple antennas.

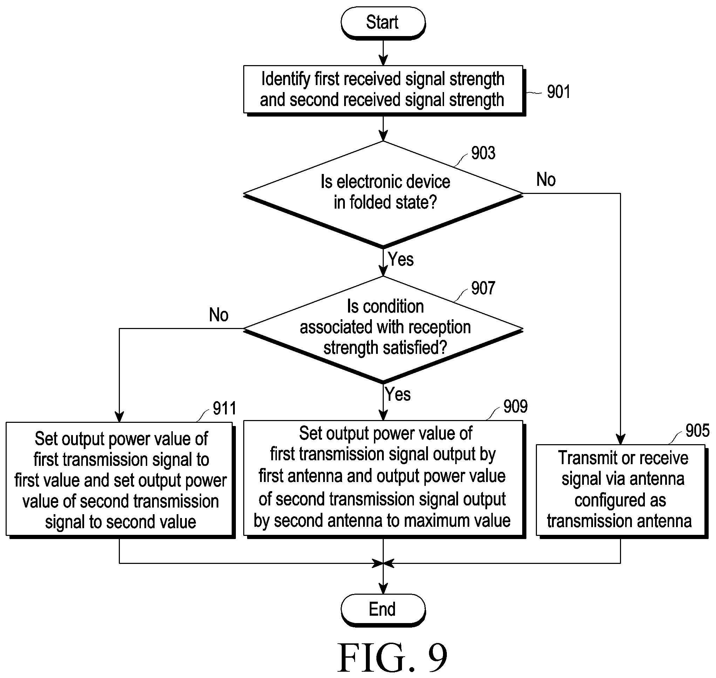

FIG. 9 is a flowchart illustrating an operation method for an electronic device according to an embodiment.

According to an embodiment, the electronic device 101 (e.g., the processor 120, the first communication processor 312, the second communication processor 314, or the integrated communication processor 460) may identify the first received signal strength and the second received signal strength in operation 901. For example, the electronic device 101 may identify at least one of RSRP, an RSRQ, or an RSSI corresponding to a signal received via a first antenna (e.g., the first antenna 441 in FIG. 5) or a second antenna (e.g., the second antenna 442 in FIG. 5). The parameter that the electronic device 101 identify to identify the received signal strength is not limited to the example described above. The electronic device 101 may, for example, identify the received signal strength at a predetermined cycle.

In an embodiment, the electronic device 101 may identify whether the state of the electronic device 101 corresponds to the folded state in operation 903. For example, the electronic device (e.g., the communication processor 460 in FIG. 4) may identify whether the state of the electronic device 101 corresponds to the folded state or the unfolded state by using the sensor module (e.g., the sensor module 176 in FIG. 1), based on information related to the state of the electronic device 101 identified by the application processor (e.g., the main processor 121 in FIG. 1). In operation 905, the electronic device 101 may transmit or receive a signal via an antenna configured as a transmission antenna, based on identifying that the electronic device 101 is not in the folded state (operation 903-No). In case that the state of the electronic device 101 corresponds to the unfolded state, the electronic device 101 may transmit a signal by using only one antenna, as described with reference to Table 2.

In an embodiment, based on identifying that the electronic device 101 is in the folded state (operation 903-Yes), the electronic device 101 may, in operation 907, identify whether a condition associated with the reception strength is satisfied.

In an embodiment, the electronic device 101 may identify whether a greater value between the first received signal strength and the second received signal strength is less than a second threshold value. The electronic device 101 may identify that the electronic device 101 is located in a relatively weak electric field, based on identifying that a greater value between the first received signal strength and the second received signal strength is less than the second threshold value. The electronic device 101 may identify that the electronic device 101 is located in a relatively strong electric field, based on identifying that a greater value between the first received signal strength and the second received signal strength is greater than or equal to the second threshold value.

In an embodiment, the electronic device 101 may identify whether a difference between the first received signal intensity and the second received signal intensity is less than a first threshold value. The electronic device 101 may identify that the electronic device 101 is located in a relatively weak electric field, based on identifying that a greater value between the first received signal strength and the second received signal strength is less than the second threshold value. The electronic device 101 may identify that the electronic device 101 is located in a relatively strong electric field, based on identifying that a greater value between the first received signal strength and the second received signal strength is greater than or equal to the second threshold value. In an embodiment, the electronic device 101 may identify that a condition associated with a reception strength is satisfied, based on identifying that a greater value between the first received signal strength and the second received signal strength is less than the second threshold value, and a difference between the first received signal strength and the second received signal strength is less than the first threshold.

In an embodiment, the electronic device 101, based on identifying that the difference between the first received signal strength and the second received signal strength is less than the first threshold value, may identify whether a smaller value between the first received signal strength and the second received signal strength is less than a third threshold value, thereby identifying that a condition associated with the received signal strength is satisfied.

In an embodiment, the electronic device 101, based on identifying that the condition associated with the received signal strength is not satisfied (operation 907-No), may change an output power value of the first transmission signal to a first value smaller than the maximum value and change an output power value of the second transmission signal to a second value smaller than the maximum value in operation 911. The electronic device 101 may, for example, set transmission power of a signal output from the first antenna and the second antenna to a value smaller than the maximum value, based on the first received signal strength and the second received signal strength being greater than or equal to the third threshold value. The electronic device 101 may distribute the transmission power for the first antenna and the second antenna, based on identifying that the state of the channel established between the electronic device 101 and the communication network is relatively good.

In an embodiment, based on identifying that the condition associated with the reception strength is satisfied (operation 909-Yes), the electronic device 101 may set, in operation 909, the output power value of the first transmission signal output by the first antenna and the output power value of the second transmission signal output by the second antenna to a maximum value. In an embodiment, when the electronic device 101 corresponds to the folded state, the electronic device 101 may enhance the transmission performance by transmitting the same data to the communication network via the multiple antennas.

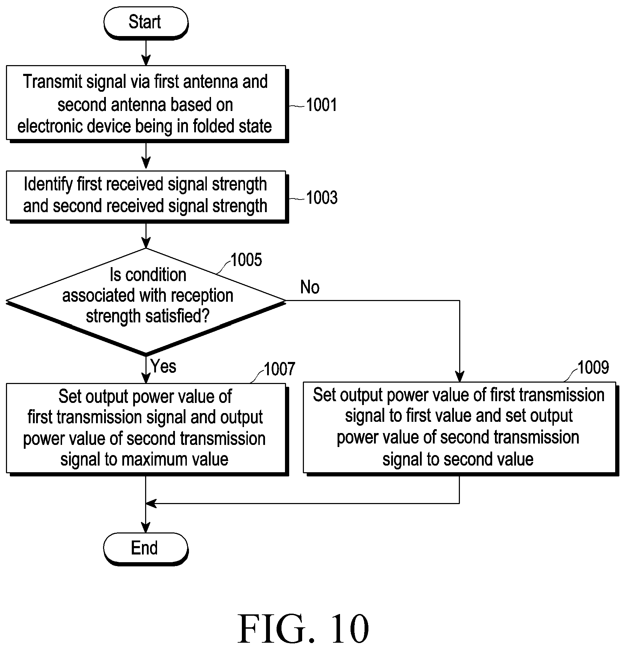

FIG. 10 is a flowchart illustrating an operation method for an electronic device according to an embodiment.

According to an embodiment, the electronic device 101 (e.g., the processor 120, the first communication processor 312, the second communication processor 314, or the integrated communication processor 460) may transmit a signal via the first antenna and the second antenna, based on the electronic device being in the folded state in operation 1001. The electronic device 101 may transmit signals of the same phase via the first antenna and the second antenna at least simultaneously, based on identifying that transmission power of signals radiated via antennas may be improved by transmitting the signals via multiple antennas in the folded state.

In an embodiment, the electronic device 101 may identify the first received signal strength and the second received signal strength in operation 1003. For example, the electronic device 101 may identify at least one of RSRP, an RSRQ, or an RSSI corresponding to a signal received via a first antenna (e.g., the first antenna 441 in FIG. 5) or a second antenna (e.g., the second antenna 442 in FIG. 5). The parameter that the electronic device 101 identify to identify the received signal strength is not limited to the example described above. The electronic device 101 may, for example, identify the received signal strength at a predetermined cycle.

In an embodiment, the electronic device 101 may identify whether a condition associated with the received signal strength is satisfied in operation 1005.

In an embodiment, the electronic device 101 may identify whether a greater value between the first received signal strength and the second received signal strength is less than a second threshold value. The electronic device 101 may identify that the electronic device 101 is located in a relatively weak electric field, based on identifying that a greater value between the first received signal strength and the second received signal strength is less than the second threshold value. The electronic device 101 may identify that the electronic device 101 is located in a relatively strong electric field, based on identifying that a greater value between the first received signal strength and the second received signal strength is greater than or equal to the second threshold value.

In an embodiment, the electronic device 101 may identify whether a difference between the first received signal intensity and the second received signal intensity is less than a first threshold value. The electronic device 101 may identify that the electronic device 101 is located in a relatively weak electric field, based on identifying that a greater value between the first received signal strength and the second received signal strength is less than the second threshold value. The electronic device 101 may identify that the electronic device 101 is located in a relatively strong electric field, based on identifying that a greater value between the first received signal strength and the second received signal strength is greater than or equal to the second threshold value. In an embodiment, the electronic device 101 may identify that a condition associated with a reception strength is satisfied, based on identifying that a greater value between the first received signal strength and the second received signal strength is less than the second threshold value, and a difference between the first received signal strength and the second received signal strength is less than the first threshold.

In an embodiment, the electronic device 101, based on identifying that the difference between the first received signal strength and the second received signal strength is less than the first threshold value, may identify whether a smaller value between the first received signal strength and the second received signal strength is less than a third threshold value, thereby identifying that a condition associated with the received signal strength is satisfied.

In an embodiment, the electronic device 101, based on identifying that the condition associated with the received signal strength is not satisfied (operation 1005-No), may set an output power value of the first transmission signal to a first value smaller than the maximum value and set an output power value of the second transmission signal to a second value smaller than the maximum value in operation 1009. The electronic device 101 may, for example, set transmission power of a signal output from the first antenna and the second antenna to a value smaller than the maximum value, based on the first received signal strength and the second received signal strength being greater than or equal to the third threshold value. The electronic device 101 may distribute the transmission power for the first antenna and the second antenna, based on identifying that the state of the channel established between the electronic device 101 and the communication network is relatively good.

In an embodiment, based on identifying that the condition associated with the reception strength is satisfied (operation 1005-Yes), the electronic device 101 may set, in operation 1007, the output power value of the first transmission signal output by the first antenna and the output power value of the second transmission signal output by the second antenna to a maximum value. In an embodiment, when the electronic device 101 corresponds to the folded state, the electronic device 101 may enhance the transmission performance by transmitting the same data to the communication network via the multiple antennas.

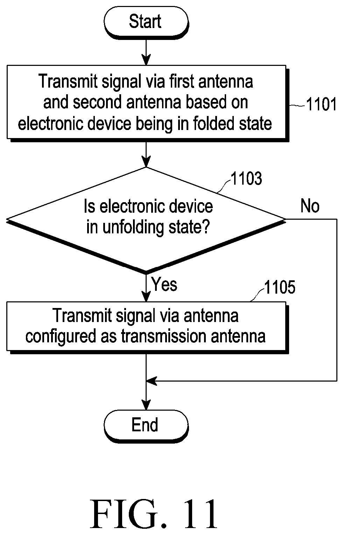

FIG. 11 is a flowchart illustrating an operation method for an electronic device according to an embodiment.

According to an embodiment, the electronic device 101 (e.g., the processor 120, the first communication processor 312, the second communication processor 314, or the integrated communication processor 460) may transmit a signal via the first antenna and the second antenna, based on the electronic device being in the folded state in operation 1101. The electronic device 101 may transmit signals of the same phase via the first antenna and the second antenna at least simultaneously, based on identifying that transmission power of signals radiated via antennas may be improved by transmitting the signals via multiple antennas in the folded state.

In an embodiment, the electronic device 101 may identify, in operation 1103, whether the electronic device is in the unfolded state. The electronic device 101 may identify whether the state of the electronic device has changed from the folded state to the unfolded state, based on information associated with the state (or folding angle) identified by, for example, an application processor.

In an embodiment, based on identifying that the electronic device is in the unfolded state, the electronic device 101 may transmit or receive a signal via an antenna set as a transmission antenna in operation 1105. The electronic device 101 may transmit a signal via a transmission antenna set as a default when, for example, a signal is transmitted by using only one antenna. The electronic device 101 may transmit a signal via one antenna designated as the transmission antenna among the first antenna and the second antenna, based on transmission performance being improved when a signal is transmitted using only one antenna in the unfolded state.

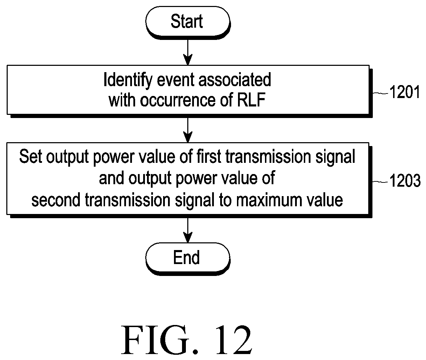

FIG. 12 is a flowchart illustrating an operation method for an electronic device according to an embodiment.

According to an embodiment, the electronic device 101 (e.g., the processor 120, the first communication processor 312, the second communication processor 314, or the integrated communication processor 460) may identify an event associated with RLF occurrence in operation 1201. The electronic device 101 may identify an event associated with the occurrence of the RLF while performing the network communication through the first antenna or the second antenna, based on the state of the electronic device 101 being corresponding to the folded state. The electronic device 101 may identify, for example, whether a count associated with a failure of a RACH procedure exceeds a set value. In an embodiment, the electronic device 101 may set the output power value of the first transmission signal and the output power value of the second transmission signal to a maximum value in operation 1203. The electronic device 101, based on identifying an event associated with the RLF, may set an output power value of a first transmission signal output by the first antenna and an output power value of a second transmission signal output by the second antenna to a maximum value. In an embodiment, the electronic device 101 may start a first timer. The electronic device 101 may start the first timer, based on identifying an event associated with the RLF. For example, the first timer may be T310, but is not limited thereto. The electronic device 101 may set the output power value of the first transmission signal output by the first antenna and the output power value of the second transmission signal output by the second antenna to a maximum value before a first time period corresponding to the first timer has elapsed.

In an embodiment, the electronic device 101 may control the RFIC to transmit signals of the same phase via the first antenna and the second antenna, based on the time delay. The electronic device 101 may set the output power value of the first transmission signal and the output power value of the second transmission signal to a maximum value based on identifying an event associated with the occurrence of the RLF, and may maintain a communication connection established with a communication network before the RLF is finalized by transmitting signals via multiple antennas.

According to an embodiment, an electronic device (e.g., the electronic device 101 in FIG. 1) configured to be foldable may include a first antenna included in a first housing of the electronic device 101 and configured to transmit or receive signals associated with network communication, a second antenna included in a second housing of the electronic device 101 and configured to transmit or receive signals associated with the network communication, at least one RFIC (e.g., at least one of the first RFIC 322, the second RFIC 324, the third RFIC 326, or the fourth RFIC 328 in FIG. 3A or 3B, or the RFIC 410 in FIG. 4) electrically connected to each of the first antenna and the second antenna, memory 130 storing instructions, and at least one processor (e.g., the processor 120 in FIG. 1, the first communication processor 312 or the second communication processor 314 in FIG. 3A, the integrated communication processor 360 in FIG. 3B, or the communication processor 460 in FIG. 4) connected to the at least one RFIC 322, 324, 326, 328, or 410 and the memory 130. The instructions, when executed by the at least one processor 120, 312, 314, 360, or 460, may cause the electronic device 101 to identify a first received signal strength corresponding to the first antenna and a second received signal strength corresponding to the second antenna. The instructions, when executed by the at least one processor 120, 312, 314, 360, or 460, may cause the electronic device 101 to identify whether a value of a first parameter identified based on the first received signal strength and the second received signal strength is less than a threshold value. The instructions, when executed by the at least one processor 120, 312, 314, 360, or 460, may cause the electronic device 101 to identify whether the electronic device 101 is in a folded state. The instructions, when executed by the at least one processor 120, 312, 314, 360, or 460, may cause the electronic device 101 to, based on identifying that the value of the first parameter is less than the threshold value and the electronic device 101 is in the folded state, set transmission of signals via the first antenna and the second antenna. The instructions, when executed by the at least one processor 120, 312, 314, 360, or 460, may cause the electronic device 101 to control the at least one RFIC 322, 324, 326, 328, or 410 to transmit signals of the same phase via the first antenna and the second antenna.

In an embodiment, the instructions, when executed by the at least one processor 120, 312, 314, 360, or 460, cause the electronic device 101 to, as at least part of identifying whether the value of the first parameter identified based on the first received signal strength and the second received signal strength is less than the threshold value, identify whether a difference between the first received signal strength and the second received signal strength is less than a first threshold value.

In an embodiment, the instructions, when executed by the at least one processor 120, 312, 314, 360, or 460, may cause the electronic device 101 to identify whether a value of a second parameter identified based on the first received signal strength and the second received signal strength is less than a second threshold value. The value of the second parameter is a greater value between the first received signal strength and the second received signal strength.

In an embodiment, the instructions, when executed by the at least one processor 120, 312, 314, 360, or 460, may cause the electronic device 101 to, in case that the first parameter is greater than or equal to the first threshold value, configure an antenna having a greater received signal strength between the first antenna and the second antenna as a transmission antenna. The instructions, when executed by the at least one processor 120, 312, 314, 360, or 460, may cause the electronic device 101 to transmit signals associated with the network communication via the configured transmission antenna.

In an embodiment, the instructions, when executed by the at least one processor 120, 312, 314, 360, or 460, may cause the electronic device 101 to, in case that the second parameter is less than the second threshold value, set output power values of the first transmission signal and the second transmission signal to a maximum value. In an embodiment, the instructions, when executed by the at least one processor 120, 312, 314, 360, or 460, may cause the electronic device 101 to, in case that the second parameter is greater than or equal to the second threshold value, change the output power value of the first transmission signal to a first value smaller than the maximum value and set the output power value of the second transmission signal to a second value smaller than the maximum value.

In an embodiment, the instructions, when executed by the at least one processor 120, 312, 314, 360, or 460, may cause the electronic device 101 to, based on the electronic device 101 being in the folded state, identify an event associated with occurrence of RLF while performing the network communication via the first antenna or the second antenna. In an embodiment, the instructions, when executed by the at least one processor 120, 312, 314, 360, or 460, may cause the electronic device 101 to, based on identifying the event associated with the RLF, set an output power value of a first transmission signal output by the first antenna and an output power value of a second transmission signal output by the second antenna to a maximum value.

In an embodiment, the instructions, when executed by the at least one processor 120, 312, 314, 360, or 460, may cause the electronic device 101 to, as at least part of identifying the event associated with the occurrence of RLF, identify whether a count associated with failure of a RACH procedure exceeds a set value.

In an embodiment, a distance between the first antenna and the second antenna decreases when the electronic device 101 is changed from the unfolded state to the folded state.

In an embodiment, the RFIC 322, 324, 326, 328, or 410 is configured to make phases of a signal output via the first antenna and a signal output via the second antenna identical based on a time delay.

In an embodiment, the instructions, when executed by the at least one processor 120, 312, 314, 360, or 460, may cause the electronic device 101 to, as at least part of identifying the first received signal strength corresponding to the first antenna and the second received signal strength corresponding to the second antenna, identify at least one of RSRP, RSRQ, or RSSI corresponding to a signal received via the first antenna or the second antenna.

According to an embodiment, an operation method for an electronic device (e.g., the electronic device 101 in FIG. 1) may include an operation of identifying a first received signal strength corresponding to a first antenna included in a first housing of the electronic device 101 and a second received signal strength corresponding to a second antenna included in a second housing of the electronic device 101. The method may include an operation of identifying whether a value of a first parameter identified based on the first received signal strength and the second received signal strength is less than a threshold value. The method may include an operation of identifying whether the electronic device 101 is in a folded state. The method may include an operation of, based on identifying that the value of the first parameter is less than the threshold value and the electronic device 101 is in the folded state, configuring transmission of signals via the first antenna and the second antenna. The method may include an operation of controlling at least one RFIC (e.g., at least one of the first RFIC 322, the second RFIC 324, the third RFIC 326, or the fourth RFIC 328 in FIG. 3A or 3B, or the RFIC 410 in FIG. 4) to transmit signals of the same phase via the first antenna and the second antenna.

In an embodiment, the operation method for the electronic device 101 may include an operation of, as at least part of identifying whether the value of the first parameter identified based on the first received signal strength and the second received signal strength is less than the threshold value, identifying whether a difference between the first received signal strength and the second received signal strength is less than a first threshold value.

In an embodiment, the operation method for the electronic device 101 may include an operation of identifying whether the value of a second parameter identified based on the first received signal strength and the second received signal strength is less than a second threshold value. The value of the second parameter is a greater value between the first received signal strength and the second received signal strength.

In an embodiment, the operation method for the electronic device 101 may include an operation of, in case that the first parameter is greater than or equal to the first threshold value, configuring an antenna having a greater received signal strength between the first antenna and the second antenna as a transmission antenna. The method may further include an operation of transmitting signals associated with the network communication via the configured transmission antenna.

In an embodiment, the operation method for the electronic device 101 may include an operation of, in case that the second parameter is less than the second threshold value, setting output power values of the first transmission signal and the second transmission signal to a maximum value. The method may further include an operation of, in case that the second parameter is greater than or equal to the second threshold value, changing the output power value of the first transmission signal to a first value smaller than the maximum value and setting the output power value of the second transmission signal to a second value smaller than the maximum value.

In an embodiment, the operation method for the electronic device 101 may further include an operation of identifying an event associated with the occurrence of the RLF while performing the network communication through the first antenna or the second antenna, based on the state of the electronic device 101 being corresponding to the folded state. The method may further include an operation of, based on identifying an event associated with the RLF, setting an output power value of a first transmission signal output by the first antenna and an output power value of a second transmission signal output by the second antenna to a maximum value.

In an embodiment, in the operation method for the electronic device 101, the operation of identifying the event associated with the occurrence of RLF may include an operation of identifying whether a count associated with failure of a RACH procedure exceeds a set value.

In an embodiment, in the operation method for the electronic device 101, the operation of identifying the first received signal strength corresponding to the first antenna and the second received signal strength corresponding to the second antenna may include an operation of identifying at least one of RSRP, RSRQ, or RSSI corresponding to a signal received via the first antenna or the second antenna.

The electronic device according to embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) configured to be foldable, comprising:
a first antenna included in a first housing of the electronic device (101) and configured to transmit or receive signals associated with network communication;
a second antenna included in a second housing of the electronic device (101) and configured to transmit or receive signals associated with the network communication;
at least one RFIC (322; 324; 326; 328; 410) electrically connected to each of the first antenna and the second antenna;
memory (130) storing instructions; and
at least one processor (120; 312; 314; 360; 460) connected to the at least one RFIC (322; 324; 326; 328; 410) and the memory (130),
wherein the instructions, when executed by the at least one processor (120; 312; 314; 360; 460), cause the electronic device (101) to:
identify a first received signal strength corresponding to the first antenna and a second received signal strength corresponding to the second antenna,
identify whether a value of a first parameter identified based on the first received signal strength and the second received signal strength is less than a threshold value,
identify whether the electronic device (101) is in a folded state,
based on identifying that the value of the first parameter is less than the threshold value and the electronic device (101) is in the folded state, configure transmission of signals via the first antenna and the second antenna, and
control the at least one RFIC (322; 324; 326; 328; 410) to transmit signals of the same phase via the first antenna and the second antenna.

2. The electronic device (101) of claim 1, wherein the instructions, when executed by the at least one processor (120; 312; 314; 360; 460), cause the electronic device (101) to, as at least part of identifying whether the value of the first parameter identified based on the first received signal strength and the second received signal strength is less than the threshold value:
identify whether a difference between the first received signal strength and the second received signal strength is less than a first threshold value.

3. The electronic device (101) of any one of claims 1 to 2, wherein the instructions, when executed by the at least one processor (120; 312; 314; 360; 460), cause the electronic device (101) to:
identify whether a value of a second parameter identified based on the first received signal strength and the second received signal strength is less than a second threshold value,
wherein the value of the second parameter is a greater value between the first received signal strength and the second received signal strength.

4. The electronic device (101) of any one of claims 1 to 3, wherein the instructions, when executed by the at least one processor (120; 312; 314; 360; 460), cause the electronic device (101) to:
in case that the first parameter is greater than or equal to the first threshold value, configure an antenna having a greater received signal strength between the first antenna and the second antenna as a transmission antenna; and
transmit signals associated with the network communication via the configured transmission antenna.

5. The electronic device (101) of any one of claims 1 to 4, wherein the instructions, when executed by the at least one processor (120; 312; 314; 360; 460), cause the electronic device (101) to:
in case that the second parameter is less than the second threshold value, set output power values of a first transmission signal and a second transmission signal to a maximum value; and
in case that the second parameter is greater than or equal to the second threshold value, change the output power value of the first transmission signal to a first value smaller than the maximum value and set the output power value of the second transmission signal to a second value smaller than the maximum value.

6. The electronic device (101) of any one of claims 1 to 5, wherein the instructions, when executed by the at least one processor (120; 312; 314; 360; 460), cause the electronic device (101) to:
based on the electronic device (101) being in the folded state, identify an event associated with occurrence of RLF while performing the network communication via the first antenna or the second antenna; and
based on identifying the event associated with the RLF, set an output power value of a first transmission signal output by the first antenna and an output power value of a second transmission signal output by the second antenna to a maximum value.

7. The electronic device (101) of any one of claims 1 to 6, wherein the instructions, when executed by the at least one processor (120; 312; 314; 360; 460), cause the electronic device (101) to, as at least part of identifying the event associated with the occurrence of RLF:
identify whether a count associated with failure of a RACH procedure exceeds a set value.

8. The electronic device (101) of any one of claims 1 to 7, wherein a distance between the first antenna and the second antenna decreases when the electronic device (101) is changed from an unfolded state to the folded state.

9. The electronic device (101) of any one of claims 1 to 8, wherein the RFIC (322; 324; 326; 328; 410) is configured to make phases of a signal output via the first antenna and a signal output via the second antenna identical based on a time delay.

10. The electronic device (101) of any one of claims 1 to 9, wherein the instructions, when executed by the at least one processor (120; 312; 314; 360; 460), cause the electronic device (101) to, as at least part of identifying the first received signal strength corresponding to the first antenna and the second received signal strength corresponding to the second antenna:
identify at least one of RSRP, RSRQ, or RSSI corresponding to a signal received via the first antenna or the second antenna.

11. An operation method of an electronic device (101), the method comprising:
identifying a first received signal strength corresponding to a first antenna included in a first housing of the electronic device (101) and a second received signal strength corresponding to a second antenna included in a second housing of the electronic device (101);
identifying whether a value of a first parameter identified based on the first received signal strength and the second received signal strength is less than a threshold value;
identifying whether the electronic device (101) is in a folded state;
based on identifying that the value of the first parameter is less than the threshold value and the electronic device (101) is in the folded state, configuring transmission of signals via the first antenna and the second antenna; and
controlling the at least one RFIC (322; 324; 326; 328; 410) to transmit signals of the same phase via the first antenna and the second antenna.

12. The method of claim 11, wherein the identifying of whether the value of the first parameter identified based on the first received signal strength and the second received signal strength is less than the threshold value comprises identifying whether a difference between the first received signal strength and the second received signal strength is less than a first threshold value.

13. The method of any one of claims 11 and 12, wherein the identifying of whether the value of the first parameter identified based on the first received signal strength and the second received signal strength is less than the threshold value comprises identifying whether a greater value between the first received signal strength and the second received signal strength is less than a second threshold value.

14. The method of any one of claims 11 to 13, further comprising:
in case that the first parameter is greater than or equal to the first threshold value, configuring an antenna having a greater received signal strength between the first antenna and the second antenna as a transmission antenna; and
transmitting signals associated with the network communication via the configured transmission antenna.

15. The method of any one of claims 11 to 14, further comprising:
in case that the second parameter is less than the second threshold value, setting output power values of the first transmission signal and the second transmission signal to a maximum value; and
in case that the second parameter is greater than or equal to the second threshold value, changing the output power value of the first transmission signal to a first value smaller than the maximum value and setting the output power value of the second transmission signal to a second value smaller than the maximum value.
